Europäisches Patentamt

(19) **European Patent Office**

**Office européen des brevets**

(11) Numéro de publication: **0 038 267 B1**

(12) # FASCICULE DE BREVET EUROPEEN

(45) Date de publication du fascicule du brevet:
27.06.84

(51) Int. Cl.³: **A 47 G 7/00, A 01 G 5/04**

(21) Numéro de dépôt: 81400593.0

(22) Date de dépôt: 14.04.81

(54) **Pique-fleurs amélioré.**

(30) Priorité: 15.04.80 FR 8008412

(43) Date de publication de la demande:
21.10.81 Bulletin 81/42

(45) Mention de la délivrance du brevet:
27.06.84 Bulletin 84/26

(84) Etats contractants désignés:
AT BE CH DE GB IT LI LU NL SE

(56) Documents cités:
DE - A - 2 416 370
FR - A - 1 372 670
FR - A - 1 427 924
FR - A - 1 545 638
FR - A - 2 172 758
FR - A - 2 260 936
FR - A - 2 262 941
GB - A - 1 544 630
US - A - 3 003 284
US - A - 3 867 789
US - A - 4 092 801
US - A - 4 221 078

(73) Titulaire: Eychenne, Camille, 42, rue de Dunkerque,
F-11400 Castelnaudary (FR)

(72) Inventeur: Eychenne, Camille, 42, rue de Dunkerque,
F-11400 Castelnaudary (FR)

(74) Mandataire: Chevallier, Robert Marie Georges et al,
Cabinet BOETTCHER 23, rue La Boétie, F-75008 Paris
(FR)

## Description

L'invention se rapport aux pique-fleurs comprenant un support et un bloc en matière appropriée dans laquelle on peut piquer aisément les tiges de diverses fleurs avec lesquelles on réalise une composition florale. Une matière couramment utilisée à cet effet est une mousse rigide de matière plastique comme la mousse de polyuréthane.

L'emploi d'une telle mousse est connue depuis longtemps mais, comme elle est légère, elle manque de stabilité de sorte qu'on l'a utilisée avec un support rigide qui lui donne une meilleure assise et une meilleure stabilité (GB-A-1 544 630). Comme support, on s'est contenté jusqu'à présent d'une simple planche (ou d'un bac) à laquelle le bloc de mousse est fixé par sa face inférieure à l'aide d'un moyen quelconque convenable.

L'invention a pour but d'améliorer les piques-fleurs en apportant un support nouveau qui procure plusieurs avantages par rapport au support en bois habituel.

Un support conforme à l'invention est constitué par un profilé ayant une âme centrale et deux ailes s'étendant de part et d'autre de l'âme et étant totalement ou en partie situées dans des plans perpendiculaires à l'âme ou inclinées par rapport à celle-ci. La distance qui sépare les deux ailes opposées d'un côté de l'âme est sensiblement égale à une dimension du bloc de mousse.

Sur le côté opposé par rapport à l'âme le bord extrême libre des ailes est pourvu d'une languette continue située dans un plan parallèle au plan de l'âme. De préférence, les languettes sont dirigées l'une vers l'autre et, de préférence encore, la face externe longitudinale des languettes présente une rugosité défavorable au glissement.

Dans la réalisation de l'invention, l'âme centrale est double; elle est composée de deux parois parallèles, faiblement espacées, réunies par au moins une cloison interne parallèle aux ailes.

Dans un pique-fleurs conforme à l'invention, le support repose par la face externe des languettes et le bloc de mousse est engagé entre les deux ailes situées du côté opposé aux languettes. Si on le souhaite, il est fixé, par exemple par collage, à l'âme du profilé.

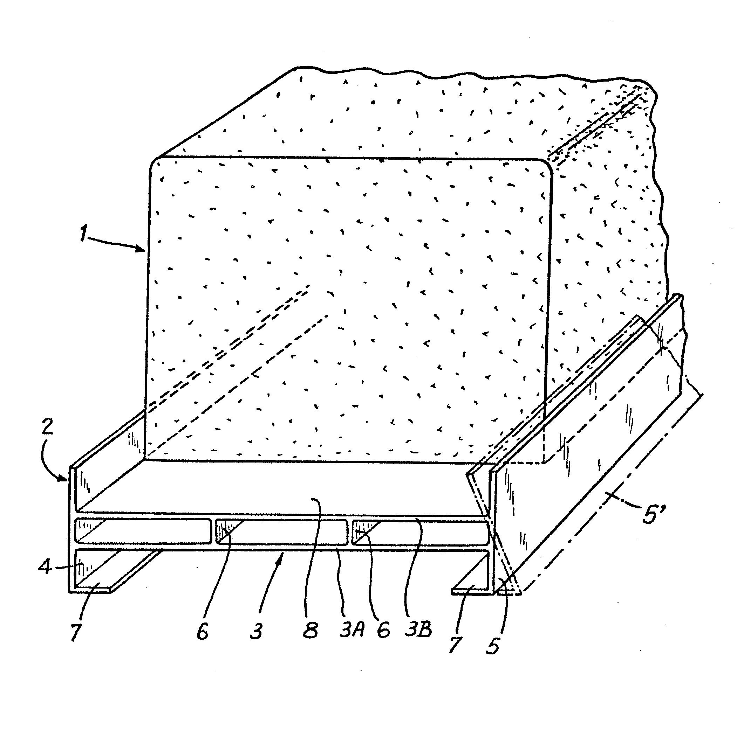

Pour bien faire comprendre l'invention, on donnera maintenant une description d'un exemple préféré de réalisation. On se reportera à la figure unique annexée qui est une vue en perspective d'un pique-fleurs selon l'invention.

Le pique-fleurs représenté comprend un bloc de mousse 1 connu en soi et un support 2. Ce dernier est un profilé ayant une âme centrale 3 et deux ailes opposées 4, 5 s'étendant de part et d'autre de l'âme 3, le long des bords longitudinaux opposés de celle-ci, dans des plans perpendiculaires au plan de l'âme.

L'âme est composée de deux parois 3A, 3B qui sont parallèles et faiblement espacées l'une de l'autre; en outre elles sont réunies l'une à l'autre par des cloisons internes 6 qui s'étendent longitudinalement en sens parallèle dans l'ensemble aux ailes 4, 5. Le nombre des cloisons internes 6 dépend de la distance prévue entre les ailes 4, 5 et cette distance dépend elle-même de la largeur du bloc de mousse 1.

Sur leur bord opposé au bloc de mousse 1, les ailes 4, 5 sont munies chacune d'une languette continue 7, parallèle à l'âme 3. Ces languettes 7 sont, de préférence dirigées l'une vers l'autre, c'est-à-dire vers l'intérieur du profilé.

Dans un pique-fleur conforme à l'invention, le bloc de mousse 1 est introduit d'un côté de l'âme 3 entre les ailes 4, 5 et il repose sur l'âme 3. Si on le juge souhaitable, il peut être fixé par collage à la face supérieure de cette âme. Le support 2 est lui-même posé sur une surface quelconque par la face inférieure des languettes 7, lorsque celles-ci existent, et, de préférence, ces faces inférieures sont striées ou pourvues d'aspérités, ou rendues rugueuses d'une manière quelconque, pour avoir un effet défavorable au glissement.

Ainsi qu'on l'a écrit plus haut, les ailes 4, 5 sont situées dans des plans perpendiculaires au plan de l'âme 3. Il entre dans le cadre de l'invention de donner aux ailes 4, 5 une inclinaison — comme suggéré par l'aile 5' dessinée en trait mixte — grâce à laquelle elles se rapprochent l'une de l'autre du côté du bloc de mousse 1 et elles s'éloignent l'une de l'autre du côté opposé. De cette façon, le bloc de mousse 1 peut être introduit entre les ailes 4, 5 par un mouvement de glissement longitudinal au cours duquel ces ailes pénètrent dans la mousse qui est friable. Ainsi le bloc de mousse 1 est mieux retenu entre les ailes 4, 5; en outre, le support est plus stable du fait du plus grand écartement des ailettes à la base du support.

En variante, les ailettes 4, 5 pourraient être perpendiculaires à l'âme 3 d'un seul côté de celle-ci (du côté du bloc de mousse 1 ou du côté opposé) et inclinées de l'autre côté (soit l'une vers l'autre seulement du côté du bloc de mousse 1, soit en s'éloignant l'une de l'autre pour accroître la stabilité du support).

On notera que le support 2 est économique grâce à sa conception permettant de le réaliser en matière extrudée; il facilite la mise en place du bloc de mousse 1, et il donne plus de stabilité à la composition florale piquée dans le bloc de mousse.

## Revendications

1. Pique-fleurs comprenant un bloc de mousse (1) et un support (2) de ce bloc de mousse constitué par un profilé ayant une âme centrale (3), deux ailes opposées (4, 5) contenant entre elles le bloc de mousse (1) d'un côté de l'âme centrale (3) caractérisé en ce que l'âme centrale (3) est double et comprend deux parois parallèles (3A, 3B) faiblement espacées et réunies entre elles par au moins une cloison interne (6), cependant que deux ailes supplémentaires extérieures au volume réservé au bloc de mousse (1) s'étendent à partir de l'âme centrale (3) pour servir de moyens de sustentation du pique-fleurs sur le sol, l'âme centrale (3) avec sa ou ses cloisons internes (6), les ailes et les ailes supplémentaires extérieures s'étendant parallèlement dans une même direction longitudinale permettant l'extrusion dudit profilé.

2. Pique-fleurs selon la revendication 1, caractérisé en ce que les ailes supplémentaires extérieures sont situées chacune respectivement dans le même plan que les ailes contenant entre elles le bloc de mousse (1).

3. Pique-fleurs selon la revendication 1, caractérisé en ce que les ailes (4, 5) sont parallèles entre elles et situées dans des plans perpendiculaires au plan de l'âme (3).

4. Pique-fleurs selon la revendication 1, caractérisé en ce que, du côté de l'âme (3) où se trouve le bloc de mousse (1) les ailes (4, 5) sont inclinées l'une vers l'autre.

5. Pique-fleurs selon l'une quelconque des revendications 1 à 4, caractérisé en ce que, du côté de l'âme opposé au bloc de mousse (1) les ailes (4, 5) sont inclinées vers l'extérieur en s'éloignant l'une de l'autre.

6. Pique-fleurs selon l'une quelconque des revendications 1 à 5, caractérisé en ce que les ailes (4, 5) sont pourvues chacune à leur bord opposé au bloc de mousse (1) d'une languette (7) parallèle à l'âme (3).

7. Pique-fleurs selon la revendication 6, caractérisé en ce que les languettes (7) sont dirigées l'une vers l'autre.

8. Pique-fleurs selon la revendication 7, caractérisé en ce que la face inférieure des languettes (7) a une rugosité défavorable au glissement.

## Patentansprüche

1. Steckkörper für Schnittblumen mit einem Schaumstoffblock (1) und einer Halterung (2) für diesen Schaumstoffblock, die durch ein Profil mit einem mittigen Steg (3) und zwei gegenüberliegenden Schenkeln (4, 5), zwischen denen sich an einer Seite des mittigen Steges (3) der Schaumstoffblock (1) befindet, dadurch gekennzeichnet, daß der mittige Steg (3) doppelt ist und zwei parallele in geringem Abstand voneinander angeordnete Wandungen (3a, 3b) enthält, die durch mindestens eine innen liegende Trennwand (6) miteinander verbunden sind, während zwei zusätzliche außerhalb des für den Schaumstoffblock vorbehaltenen Raumes liegende Flügel sich vom mittigen Steg (3) weg erstrecken, und als Mittel zum Abstützen des Steckkörpers für Schnittblumen auf dem Boden dienen, und daß der mittige Steg (3) mit seiner oder seinen innenliegenden Trennwänden (6), die Schenkel und die zusätzlichen außenliegenden Schenkel sich in derselben Längsrichtung parallel erstrecken, um das Extrudieren des genannten Profils zu ermöglichen.

2. Steckkörper für Schnittblumen nach Anspruch 1, dadurch gekennzeichnet, daß die zusätzlichen außenliegenden Schenkel jeweils in der selben Ebene liegen wie die Schenkel, zwischen denen sich der Schaumstoffblock (1) befindet.

3. Steckkörper für Schnittblumen nach Anspruch 1, dadurch gekennzeichnet, daß die Schenkel (4), (5) parallel zueinander sind und die Ebenen, die rechtwinkelig zur Ebene des Steges (3) sind, liegen.

4. Steckkörper für Schnittblumen nach Anspruch 1, dadurch gekennzeichnet, daß auf der Seite des Steges (3), auf der sich der Schaumstoffblock (1) befindet, die Flügel (4), (5) zueinander geneigt sind.

5. Steckkörper für Schnittblumen nach einem der Ansprüche 1 bis 4, dadurch gekennzeichnet, daß die Schenkel (4, 5) auf der dem Schaumstoffblock (1) gegenüberliegenden Seite des Steges nach außen geneigt sind und voneinander weg weisen.

6. Steckkörper für Schnittblumen nach einem der Ansprüche 1 bis 5, dadurch gekennzeichnet, daß die Schenkel (4), (5) jeweils an ihrem dem Schaumstoffblock (1) abgewandten Rand mit einer Zunge (7) parallel zum Steg (3) versehen sind.

7. Steckkörper für Schnittblumen nach Anspruch 6, dadurch gekennzeichnet, daß die Zungen (7) zueinander gerichtet sind.

8. Steckkörper für Blumen nach Anspruch 7, dadurch gekennzeichnet, daß die untere Fläche der Zungen (7) eine Rauheit aufweist, die einem Weggleiten entgegen wirkt.

## Claims

1. A flower holder comprising a block of foam material (1) and for this block of foam material a support (2) which consists of a profiled piece having a central web (3) and two opposite flanges (4, 5) which contain the block of foam material (1) between them on one side of the central web (3), characterized in that the central web (3) is double and comprises two parallel walls (3A, 3B) a little distance apart and joined together by at least one internal partition (6), whilst two supplementary flanges outside the volume reserved for the block of foam material (1) extend from the central web (3) in order to serve as means of supporting the flower holder upon the ground, the central web (3) with its internal partition or partitions (6), the flanges and the external supplementary flanges extending in parallel in one and the same longitudinal direction, enabling extrusion of the said profiled piece.

2. A flower holder as in claim 1, characterized in that the external supplementary flanges are situated each respectively in the same plane as the flanges which contain between them the block of foam material (1).

3. A flower holder as in claim 1, characterized in that the flanges (4, 5) are parallel with one another and situated in planes perpendicular to the plane of the web (3).

4. A flower holder as in claim 1, characterized in that on the side of the web (3) where the block of foam material (1) is lying the flanges (4, 5) are inclined towards one another.

5. A flower holder as in any one of the claims 1 to 4, characterized in that on the side of the web remote from the block of foam material (1) the flanges (4, 5) are inclined towards the outside away from one another.

6. A flower holder as in any one of the claims 1 to 5, characterized in that the flanges (4, 5) are each provided at the edge of them from the block of foam material (1) with a small tongue (7) parallel with the web (3).

7. A flower holder as in claim 6, characterized in that the small tongues (7) are directed towards one another.

8. A flower holder as in claim 7, characterized in that the lower face of the small tongues (7) has a roughness unfavourable to sliding.